# EUROPEAN PATENT SPECIFICATION

(11) **EP 3 779 500 B1**
(45) Date of publication and mention of the grant of the patent: **21.08.2024**
(21) Application number: 19194469.3
(22) Date of filing: 29.08.2019
(51) Int. Cl.: G01S 7/02, G01S 13/931, G01S 13/42, G01S 7/35, G01S 13/34

(54) **FREQUENCY RAMP INVERSION FOR INTERFERENCE MITIGATION**
FREQUENZRAMPENUMKEHR ZUR INTERFERENZABSCHWÄCHUNG
INVERSION DE RAMPE DE FRÉQUENCE POUR LA RÉDUCTION DES INTERFÉRENCES

(30) Priority: 13.08.2019 EP 19191476
(43) Date of publication of application: 17.02.2021
(73) Proprietor: Magna Electronics Sweden AB, 447 37 Vårgårda (SE)
(72) Inventor: Moss, Jonathan, 85716 Unterschleissheim (DE); Fetterman, Matt, Lowell, MA 01854 (US); Lefevre, Andreas, 97464 Niederwerrn (DE); Fuchs, Martin, 85716 Unterschleissheim (DE); Kritzner, Michael, 97464 Niederwerrn (DE); Goelz, Hansjerg, 85716 Unterschleissheim (DE)
(74) Representative: Westpatent AB

(56) References cited:
- WO-A1-2019/106656
- US-A1- 2010 085 233
- US-B2- 10 067 221

## Description

The present disclosure relates to interference in radar signals, and in particular to suppression of such interference. The radar systems discussed herein are suitable as vehicle radar systems.

Many vehicle radar systems comprise radar transceivers that are arranged for generating radar signals that are transmitted, reflected and received by means of appropriate antennas comprised in the radar system. The radar signals may for example be in the form of FMCW (Frequency Modulated Continuous Wave) signals where frequency chirp signals are formed in a well-known manner.

In a multi-radar environment, radars may interfere with each other as frequency chirps cross or come close to each other in frequency. When this happens, a burst of interference somewhere within the received signal during one or more of the chirp signals can be observed. This problem becomes apparent when the received analogue signal has been converted to a digital baseband signal and typically is processed by the radar system using one or more Fast Fourier Transform (FFT) processing steps which converts signals in digital time domain into digital frequency domain signals.

If interference is present in one or more of the chirp signals, the noise floor will be raised since the noise may be spread across a wide band of frequencies. This raising of the noise floor has the effect of reducing the range and accuracy of the radar, which of course is undesirable.

EP3489710 A1 discloses an arrangement for radar interference suppression. Here, interference mitigation is achieved by replacing obtained radar samples by modified samples which are generated based on frequency domain processing of batches of samples.

WO 2019/106656 discloses a radar system based on time and frequency hopping, with a TX/RX control circuit that incorporates mutual interference detection.

US 2010/085233 A1 relates to a radar system which attempts to mitigate interference by varying transmission parameters in response to detecting interference.

US 10 067 221 B2 discusses interference in radar systems. An "interference monitoring component" coupled to the radar receiver is described which is configured to monitor sub-bands for the presence of interference.

However, additional interference suppression methods are desired.

It is an object of the present disclosure to provide improved methods and devices for interference suppression in received radar signals. This object is achieved by a method for suppressing interference in a radar transceiver. The method comprises transmitting a radar signal at a frequency f(t) with an ego ramp polarity, receiving the radar signal, and monitoring the received radar signal for interference. If interference is detected, the method comprises switching the ego ramp polarity or the interference ramp polarity to opposite polarity if a switch criterion is met.

At least part of the switch criterion comprises determining an interference impact associated with the detected interference, compared to other detected interferences.

This way the negative effects of interference are reduced. Aspects of the disclosed methods require no cooperation between radar transceivers, which is an advantage.

Various switch criteria can be considered, either as stand-alone criteria or in combination;

According to some aspects, at least part of the switch criterion comprises determining an interference ramp polarity associated with the interference. At least part of the switch criterion is met if the interference ramp polarity is the same as the ego ramp polarity. This way interference time duration is reduced, as will be explained in the following.

According to some aspects, at least part of the switch criterion comprises determining an interference impact associated with the detected interference, relative to a reference impact level, wherein at least part of the switch criterion is met if the interference impact is above the reference level. The interference impact way, e.g., be a number of corrupted samples, or an interference power.

According to further aspects, at least part of the switch criterion comprises switching ramp polarity with a given probability based on evaluation of a random value. This way a sort of random back-off mechanism is implemented, which is likely to improve performance in scenarios where more than one radar implements the herein proposed techniques.

In particular, the object is achieved by a method for suppressing interference in a radar transceiver. The method comprises transmitting a radar signal at a frequency f(t) with an ego ramp polarity and then receiving the radar signal. The method also comprises monitoring the received radar signal for interference, and, if interference is detected, determining an interference ramp polarity and/or an interference impact level associated with the interference. If the interference ramp polarity is the same as the ego ramp polarity, and/or if the impact level is above an interference impact reference level, the method switches the ego ramp polarity or the interference ramp polarity to opposite polarity.

This way the cross-over time duration for the two radar signals can be reduced, which means that the interference effects are also likely reduced. The ramp inversion can be implemented in an efficient manner which is an advantage, meaning that the proposed interference mitigation techniques are of relatively low complexity. The techniques can be implemented in a decentralized fashion without coordination or communication between vehicles. However, some aspects of the disclosed methods also comprise vehicle communication and/or arbitration by an external server or the like.

According to aspects, the monitoring comprises monitoring a sample difference between a current time domain sample x[n] and a previous time domain sample x[n-1]. This is an efficient yet low complexity method for detecting interference which can be implemented in near real-time with limited processing resources, which is an advantage.

According to aspects, the monitoring comprises filtering the received radar signal to detect signal content at frequencies adjacent to a receive frequency band of the radar transceiver. This is a robust way to detect inbound interference, which also provides some early warning, since the interference is detected before it hits the radar signal to cause corrupted receive samples.

According to aspects, the monitoring comprises receiving a feedback signal indicating an onset of interference. This allows for external processes to trigger interference mitigation by ramp inversion in case interference is detected based on, e.g., a raised noise floor or the like.

According to aspects, determining the interference ramp polarity comprises tracking the interference as it crosses a receive bandwidth of the radar transceiver. By observing the interference as it traverses the receiver bandwidth, ramp polarity can be established in a robust and straight forward manner. The ramp polarity determination can advantageously be combined with a pause in ego radar transmission, which spares the other radar transceiver causing the interference at the same time as it allows to more clearly monitor the interfering signal as it traverses the receiver band.

As noted above, according to some aspects, the method also comprises determining an interference impact associated with the detected interference, relative to a reference impact level, and, if the interference impact is above the reference level, switching the ego ramp polarity or the interference ramp polarity to opposite polarity. Consequently, there are disclosed herein a plurality of mechanisms for triggering ramp in version to mitigate interference effects. Interference impact may be determined, e.g., in terms of the number of interfered samples for each interference event.

According to aspects, determining the interference ramp polarity comprises filtering the received radar signal to detect signal content at adjacent frequencies above and below a receive frequency band of the radar transceiver. The filter bank represents a robust way to determine ramp polarity. It can be implemented at radio frequency in analog technology, which is an advantage.

According to aspects, switching the ego ramp polarity or the interference ramp polarity comprises switching ramp polarity with a given probability. This way, if both radar transceivers implement the proposed methods, then it becomes more unlikely that both radar transceivers switch ramp polarity at the same time, which would void the interference mitigation effects since then both radar transceivers would again have the same ramp polarity. The mechanism provides something akin to a random back-off contention mechanism.

According to aspects, the method comprises re-configuring a frequency derivative of the transmitted radar signal in dependence of parameters of the detected interference. For instance, particularly severe interference can be further mitigated by increasing ramp frequency derivative, since this has the effect of further reducing cross-over time duration.

According to aspects, the method also comprises adjusting a transmission delay parameter of the transmitted radar signal in dependence of parameters of the detected interference. By adjusting the delay parameter interference can, e.g., be shifted to the start or end parts of a chirp, which parts are less sensitive to the interference due to the windowing which is often performed during further processing.

There are also disclosed herein radar transceivers, control units and vehicles associated with the above-mentioned advantages. The herein disclosed methods may be executed in a vehicle or at least in part by a remote server wirelessly connected to the vehicle.

### BRIEF DESCRIPTION OF THE DRAWINGS

The present disclosure will now be described more in detail with reference to the appended drawings, where:
Figure 1 shows a schematic top view of vehicles;
Figure 2 shows an example of a transmitted radar signal;
Figure 3A schematically illustrates radar interference;
Figures 3B and 3C show example ramp polarities;
Figure 4 schematically illustrates a radar transceiver;
Figures 5-6 illustrate radar interference;
Figure 7 is a flowchart illustrating methods;
Figure 8 shows an example control unit; and
Figure 9 shows an example computer program product.

### DETAILED DESCRIPTION

The inventive concept will now be described more fully hereinafter with reference to the accompanying drawings, in which certain embodiments of the inventive concept are shown. This inventive concept may, however, be embodied in many different forms and should not be construed as limited to the embodiments set forth herein; rather, these embodiments are provided by way of example so that this disclosure will be thorough and complete, and will fully convey the scope of the inventive concept to those skilled in the art. Like numbers refer to like elements throughout the description. Any step or feature illustrated by dashed lines should be regarded as optional.

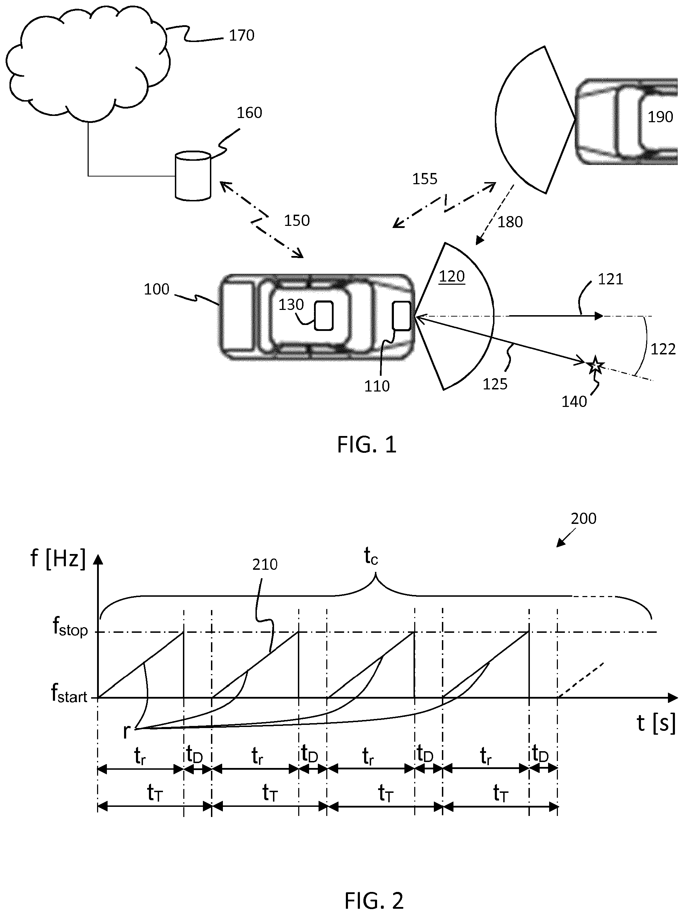

Figure 1 shows a vehicle 100 equipped with a vehicle radar system 110, 130. The vehicle radar system comprises at least one vehicle radar transceiver 110 and a radar data processing system or control unit 130. It is appreciated that the radar transceiver 110 and the control unit 130 may be comprised in a single physical unit or may be distributed over more than one physical unit. Some parts of the functionality may even be comprised in a remote server 160 or cloud-based resource 170 connected to the vehicle via wireless link 150.

According to an example, the vehicle radar system 110, 130 comprises a transceiver arrangement that is arranged for generating and transmitting radar signals in the form of frequency modulated continuous wave (FMCW) signals, sometimes also referred to as radar chirp signals, and to receive reflected radar signals 125, where the transmitted signals have been reflected by an object 140.

It is appreciated that the present disclosure is not limited to FMCW radar waveforms, rather, the disclosed concepts and techniques can be applied to any radar waveform associated with a frequency ramp having a polarity. One such example is the stepped Orthogonal Frequency Division Multiplex (OFDM) radar waveform described in EP3324201 A1.

As exemplified in Figure 2, a transmitted FMCW signal is in the form of a continuous wave where the output frequency f(t) varies from a first frequency fₛₜₐᵣₜ to a second frequency fₛₜₒₚ over the course of a ramp r. Most FMCW transmissions comprise repeating cycles of a plurality of frequency ramps r as shown in Figure 2, however, some radar transmissions only comprise one slow chirp, i.e., different from the example transmission of Figure 2. A cycle for such a chirp signal lasts for a certain cycle time t_{c}, each ramp r lasts a certain ramp time tᵣ, having a ramp period time t_{T}. Between two consecutive ramps of the chirp signal there is often inserted a delay time t_{D}.

FMCW radar operation and signal processing is known in general and will not be discussed in more detail herein.

With reference again to Figure 1, the radar data processing system 130 is arranged to control operation of the radar transceiver 110, and to obtain data from the radar transceiver 110, such as detections or data points corresponding to objects 140 in vicinity of the vehicle 100.

The radar transceiver 110 may comprise a single radar unit or a plurality of radar units, potentially of different type and/or of different configuration. The different radar units may, e.g., be arranged as front radars, side radars, and/or rearward facing radars.

The radar transceiver 110 is associated with a field of view 120. In case the radar transceiver 110 is a front radar, a boresight direction 121 of the radar 110 often coincides with a center line of the field of view 120. In case the vehicle radar is instead configured as a side radar, then the boresight direction may point in some other angle compared to the forward direction of the vehicle 100.

The vehicle radar system 110, 130 in Figure 1 is subject to interference 180 from an external radar transceiver. It is, however, appreciated that interference can come from a plurality of different sources, including other radar transceivers on the same vehicle 100.

The term 'interference' is here to be interpreted broadly to comprise any signal component or signal comprised in the radar signal which has a detrimental effect on performance of a system making use of the received radar signal. Consequently, interference may comprise any of, e.g., external interference from other transmitters and radio frequency sources, internal interference from circuitry of the radar transceiver or other active components located close to the radar receiver, and pulsed interference signals which are associated with limited time duration. Nevertheless, the techniques disclosed herein are particularly suitable for mitigating interference caused by an interfering FMCW transceiver.

For an FMCW system, interference occurs when two or more radar signals 180, 210 are close together in frequency for a period of time, specifically within the intermediate frequency (IF) receiving bandwidth of each other. The net effect is that the time domain signal, i.e., the raw data or digitally sampled signal obtained after frequency down-conversion of the received radio frequency signal, experiences a burst of interference, which may be high compared to the wanted radar-return signal. There may be multiple interference bursts within a short time window.

As noted above, the vehicle radar system 110, 130 may be connected via wireless link 150 to a remote server 160, which in turn may be comprised in a cloud-based resource 170 or remote network. This server and network may be configured to assist the vehicle 100 in performing various operations such as radar interference suppression. For instance, the remote server 160 may be arranged to configure parameters such as detection thresholds used by the control unit 130 and the like remotely, and also transmission parameters of the radar transceiver, such as frequency slopes, ramp polarity, and the like. The vehicle 100 may also be able to communicate directly with an interfering entity 190 via vehicle-to-vehicle (V2V) communication 155 or indirectly via the remote server 160.

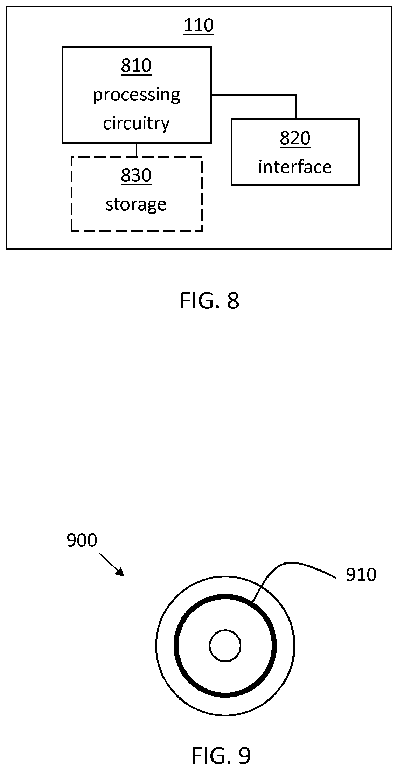

An optional storage module may also be comprised in the vehicle radar system. The storage module may store data comprising information about a surrounding environment of the vehicle 100 and about past vehicle operations, such as past experiences of radar interference and radar interference suppression operations. The storage module will be discussed in more detail below in connection to Figure 8.

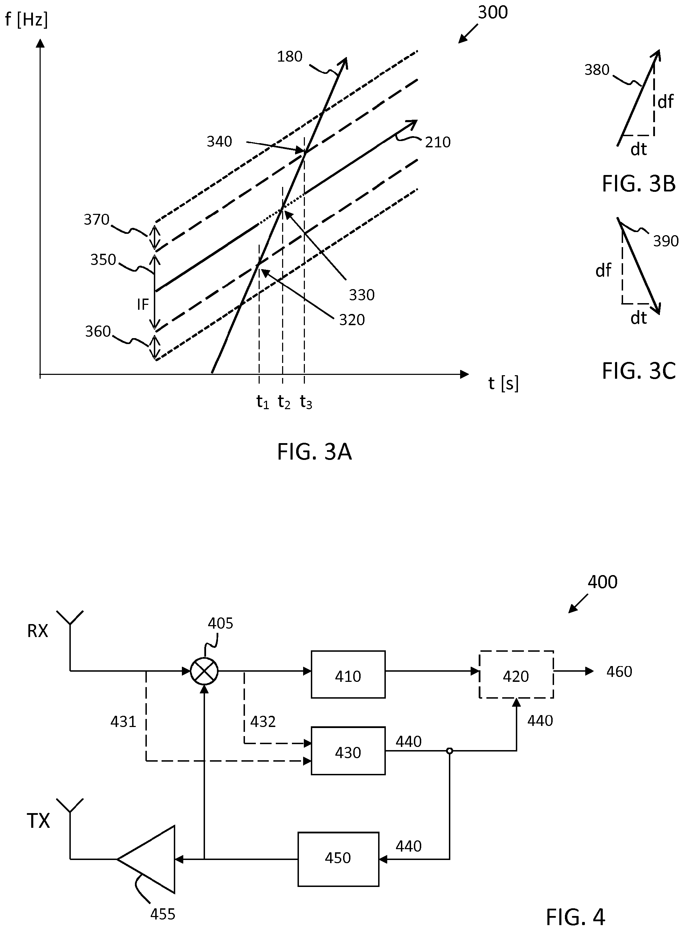

Figure 3A illustrates two FMCW radar signals 210, 180, where the radar signal 210 may be a chirp from the sequence of chirps 200 illustrated in Figure 2. Thus, the radar signal 210 may correspond to a radar signal transmitted by the vehicle 100, while radar signal 180 is an interfering radar signal. The two radar signals have different frequency slopes, i.e., a frequency change df with respect to time dt is different for the two signals. The two radar signals therefore cross each other 330 at time t₂, whereupon interference occurs (to both signals).

Most radar transmissions, such as the radar transmissions 180, 210 in Figure 3A, are associated with a ramp polarity which can be either positive or negative, i.e., the frequency ramp may be directed upwards in frequency or downwards in frequency. The example transmissions 180, 210 in Figure 3A both have positive polarity.

With reference to Figure 3B, a positive polarity frequency ramp 380 is a ramp where the frequency difference df is positive for a positive time difference dt.

With reference to Figure 3C, a negative polarity frequency ramp 390 is a ramp where the frequency difference df is negative for a positive time difference dt.

A positive frequency gradient or frequency derivative is shown in Figure 3B while a negative frequency gradient or frequency derivative is shown in Figure 3C.

With reference to Figure 1 and 3A, a radar transceiver, such as the radar transceiver 110 is often associated with a receiving bandwidth 350 in which signals are received, sometimes referred to as the intermediate frequency (IF) bandwidth of the radar transceiver. Radio frequency signals received outside 360, 370 of this bandwidth are normally filtered out by the receiver. For an FMCW transceiver, the frequency location of the IF band moves linearly over time together with the transmitted center frequency as shown in Figure 3A. It is appreciated that Figure 3A illustrates the case for a single channel mixer (only the in-phase, I-channel or "real"). In the case of a quadrature down-conversion comprising in-phase (I) and quadrature (Q) outputs, it is understood that the upper and lower sidebands could be available separately at the processor as explained in US2019011533.

If both in-phase and quadrature signals are available from the mixer, giving upper and lower sideband information, the polarity of an interfering chirp can be readily determined by comparing the two signals over time. With a single channel mixer (I-channel only), the duration of the interference or the rate of change of the resulting chirp frequency in the IF signal provides information about the interfering ramp polarity and can therefore be used to determine ramp polarity associated with an interfering signal.

With continued reference to Figure 3A, the interfering radar signal 180 enters the IF bandwidth 350 of the radar signal 210 at time t₁ and therefore starts to interfere with the radar signal 210 around time t₁. This interference continues past the point in time t₂ when cross-over 330 occurs until the interfering radar signal leaves the IF bandwidth 350 of the radar signal 210 at an exit point 340, which occurs at time t₃. Consequently, the radar signal 210 suffers from interference at least during the time duration from an IF bandwidth entry point 320 at time t₁ to the IF bandwidth exit point 340 at time t₃. It is appreciated that both onset and cessation of interference is likely to be gradual and not abrupt.

The time it takes for the interfering radar signal 180 to cross the IF bandwidth of the transmitted radar signal 210, referred to herein as the cross-over time duration, can be determined as the IF bandwidth (in Hz) divided by the relative frequency slope of the two waveforms (in Hz/sec). Thus, if the transmitted radar waveform 210 and the interfering radar waveform have similar frequency slopes, the interference will persist for a relatively long time compared to the case when the two waveforms have different frequency slopes.

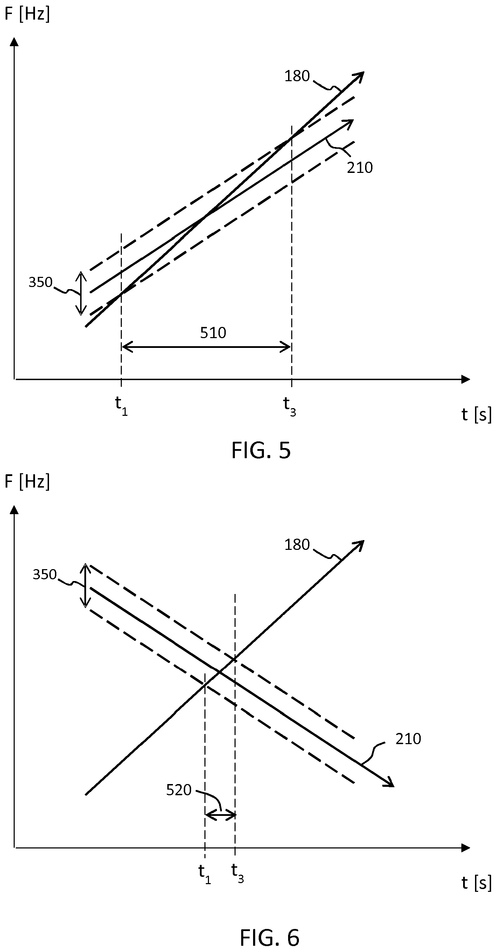

Figure 5 shows an example interference situation where the interfering radar signal 180 has a similar frequency slope compared to the transmitted radar signal 210. In this case the cross-over event, when the two waveforms are within IF bandwidth of each other, from approximately time t₁ to time t₃, may extend over a relative long time duration 510, which is not preferred since the burst of interference then extends over a significant time duration and likely corrupts many samples from an analog to digital converter (ADC) of a radar transceiver. To improve the interference conditions, the transmitted radar signal ramp (or the interfering signal ramp) may be flipped or inverted such that the frequency change in the chirp is of different sign. Figure 6 illustrates an inverted transmitted radar signal 210. The interfering radar signal 180 still has the same frequency slope. It is noted that the interference time duration 520 is now much shorter compared to the time duration 510.

This frequency slope reversal amounts to a switch in ramp polarity of one of the two waveforms. Normally, it is easier to switch polarity of the ego waveform 210 than the interfering transmitter waveform 180. However, it is possible that the interfering waveform polarity can be switched after negotiation via, e.g., V2V communication 155 or arbitration by the remote server 160.

To summarize, in case interference is detected in the received signal, the polarity of the interfering radar signal can be compared to the ego transmission ramp polarity. If the two are the same, according to some aspects of the present disclosure, the polarity of one of the waveforms can be switched in order to reduce the expected time duration of the interference.

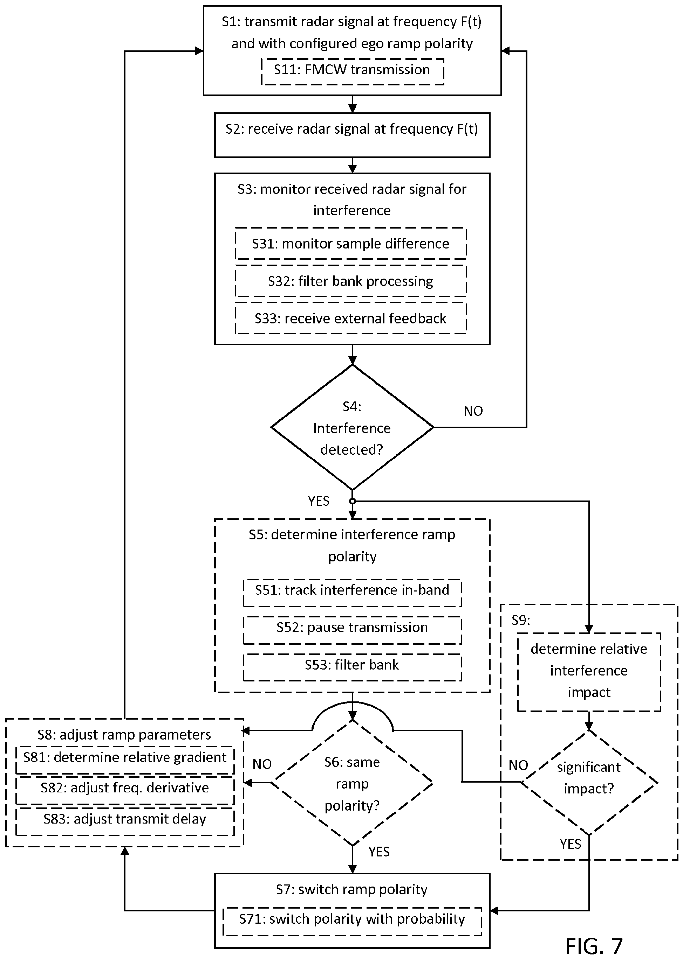

Figure 4 schematically illustrates a radar transceiver 400 arranged to perform at least some of the techniques discussed herein, and in particular those discussed in connection to Figure 7 below. A radar waveform generator 450, such as a chirp generator or stepped OFDM generator, generates the radar signal for transmission. The radar signal is amplified by a power amplifier (PA) 455, before being transmitted from a transmit antenna TX. Radar signals comprising reflected radar signals and any interfering signals are received via at least one receive antenna RX. The received radio frequency signals are downconverted by a mixer 405 and then filtered and digitized 410 by an ADC, before being forwarded for further signal processing 460 comprising, e.g., Fast Fourier Transform processing (FFT) and the like.

Prior to the further processing 460, an optional repair module 420 is arranged to replace interfered samples by an approximation of what the radar signal would have looked like had the interference not been present. An example of this type of ADC repair module 420 is given in EP3489710 A1.

The radar transceiver 400 also comprises an interference monitoring module 430. This interference monitoring module may, e.g., monitor signal occupancy in frequency bands 360, 370 adjacent to the receiving frequency band of the radar transceiver 400, i.e., the IF band. The monitoring module 430 may also monitor the IF frequency band 350 for interference.

The interference monitoring module 430 may monitor the received signal at radio frequency 431 and/or after down conversion 432. In case an interfering signal is detected as it enters the monitored frequency bands 360, 370, and/or the IF frequency band 350, a control signal 440 is generated if a switch criterion is met. Possible switch criteria are, e.g., that the detected interference is associated with a ramp polarity that is the same as the transmitted signal, and/or that the interference is deemed significant in relation to some reference level. If this is the case, i.e., if interference is detected and switch criteria are met, the transmit branch may invert ramp polarity. According to aspects, this means that if the current polarity is positive, it is re-configured to negative polarity, and if the current polarity is negative, it is re-configured to positive polarity. Normally the ego transmission would be subject to ramp polarity switch, however, as noted above, it may also be possible to invert the ramp of the interfering transmitter by negotiation via V2V communications 155 or via arbitration by the remote server 160. As noted below in connection to Figure 7, ramp polarity may be switched with some probability, effectively providing a type of random back-off mechanism in case more than one radar transceiver implements the proposed techniques. If both radar transceivers switch polarity the effects of interference suppression are of course lost.

The radar transceiver 400 is adapted to switch ramp polarity in response to detecting interference associated with a significant interference impact compared to other detected interferences. Thus, if two separate interfering signals are detected, the severity of the two, e.g., in terms of the number of interfered receiver samples, can be compared and the one with the largest number of interfered samples may be used for setting ramp polarity of the TX branch.

To summarize, Figure 4 schematically illustrates a radar transceiver 400 comprising a transmit branch TX, 450, 455, arranged to transmit a radar signal at a frequency f(t) and with one or more ego ramp parameters comprising ego ramp polarity, and a receive branch RX, 405, 410, 420, 430, 460 arranged to receive a radar signal. The receive branch comprises an interference monitoring circuit 430 configured to monitor the received signal for interference, and to generate a control signal 440 if interference is detected and if certain switch criteria are met, which switch criteria may comprise relative ramp polarity of the ego waveform and the interfering waveform. The transmit branch 450, 455 is arranged to switch sign of the ego ramp polarity parameter in response to the control signal 440.

According to aspects, the transmit branch 450, 455, TX is arranged to adjust one or more of the ego ramp parameters in dependence of the detected interference, wherein the ego ramp parameters comprises any of ramp delay, ramp frequency gradient, and number of chirps. The one or more ego ramp parameters can be adjusted in order to suppress interference further, even if the switch criteria are not met. For instance, the effects of the interference can sometimes be reduced by delaying the ramp transmission in order to shift the cross-over time instant t₂ 330 towards the beginning or the end of a chirp, where the effects will be reduced due to the windowing which often takes place as part of the further processing 460. Also, in case the interference is severe, the cross-over time duration can be reduced by also increasing frequency derivative of one of the waveforms in addition to switching ramp polarity. This way the cross-over time duration is likely shortened further.

The transmit branch may also be paused when interference is detected in order to better monitor the interference as it traverses the IF band, which also reduces interference to the other transmitter. The input to the mixer 405 from the chirp generator, i.e., a voltage controlled oscillator (VCO) or the like, can be left running during a transmission paus such that the interference can be tracked as it traverses through the IF bandwidth by the receiver branch in order to estimate ramp polarity. The ADC sampling 410 may be paused or its output not forwarded to further processing 460, since the interference is not of interest - this would be the missed section to fill in with repair methods as mentioned above. However, the ADC samples can of course be used to track the interfering signal as it traverses the IF bandwidth of the radar transceiver 400.

It is appreciated that the interference can be of varying severity, i.e., comprise more or less energy. Strong interference may have a profound impact on detection performance, while weaker interference could be tolerable in some scenarios. According to some aspects, the techniques disclosed herein also comprise determining a severity level of the interference and switching ramp polarity based on if the interference severity level meets some severity criteria. For instance, a threshold on interference power can be set, and only such interference associated with a power above the threshold would then trigger a ramp polarity switch. The threshold can be fixed or adapted during radar operation. For instance, the threshold can start out relatively low in a sequence of chirp blocks and increase each time ramp polarity is switched. This way it can be ensured that the transmitted signal is not inverted too often. Also, the threshold can be set in dependence of the traffic scenario, and/or in dependence of the interference scenario. For instance, the threshold for inverting ramp polarity may be set in dependence of the strongest interfering signal, such that ramp polarity is decided by the worst interference and not by the least severe interfering signal.

In the event that there are more than one interferer, a decision can be made whether to consider the strongest interferer (in terms of either power or energy), and perform a ramp polarity decision based on characteristics such as ramp polarity of this interferer, or, alternatively, to consider the total interference energy from all other radars and set ramp polarity to approximately minimize the total corruption or interference energy experienced. Optionally, alternating ramp polarity, or setting ramp polarity randomly, can be used in such busy scenarios when there are many sources of interference that are similar in power level.

Figure 7 shows a flow chart illustrating details of methods disclosed herein. There is shown a method for suppressing interference in a radar transceiver 110. The method comprises transmitting S1 a radar signal at a frequency f(t) with an associated ego ramp polarity.

The transmitted radar signal is preferably but not necessarily an FMCW radar signal having the frequency f(t) and the ego ramp polarity. Notably, the disclosed techniques are also applicable for a radar transceiver generating a wideband radar signal in a frequency band, e.g., a stepped OFDM radar transceiver as discussed in EP3324201 A1. This type of transmission can also be ramp-inverted in order to suffer less from an interfering transmission having a given ramp polarity, i.e., frequency derivative sign.

The method also comprises receiving S2 a radar signal, and monitoring S3 the received radar signal for interference.

Interference can be detected in a variety of different ways. One example way to detect interference is to monitor the received signal 431, 432 for sudden jumps and irregularities indicating the presence of interference. For instance, the monitoring may comprise monitoring S31 a sample difference between a current time domain sample x[n] and a previous time domain sample x[n-1]. If the difference is above a threshold Th, i.e., if x[n]-x[n-1] > Th, then interference is detected. Sample differences over a sequence of consecutive samples may also be monitored for increased robustness. Statistical analysis may further be applied to improve interference detection performance. For instance, the probability of experiencing a given sequence of sample differences over consecutive samples or a sequence of samples can be evaluated and compared to some threshold.

The monitoring may also comprise filtering S32 the received radar signal to detect signal content at frequencies adjacent to a receive frequency band of the radar transceiver 110. In case signal power is detected in a band adjacent to the receiving band of the radar transceiver there is an indication that interference is present, and that action should be taken. A filter bank can be used to filter out signal content in a number of different sub-bands adjacent to each other and to the receiving band of the radar transceiver 110. As an interfering FMCW signal approaches and leaves the receiving band of the radar transceiver 110, signal power will move between the different sub-band filters. This way the ramp polarity of the interfering waveform and optionally also a frequency ramp slope or derivative of the interfering signal 180 can be estimated if the shift in energy is clocked. This frequency slope (in terms of Hz per second) can furthermore be used to determine a suitable pausing time for pausing radar transmission if such mechanism is implemented, and/or an estimate of the cross-over time given the receiving bandwidth of the radar transceiver.

According to other aspects, the monitoring comprises receiving S33 a feedback signal indicating an onset of interference. This feedback signal may, e.g., be received from one of the further processing steps 460, which may be have detected, e.g., a sudden increase in noise floor or the like indicating interference. Thus, it is appreciated that the interference detection mechanism may be performed by an external process.

As mentioned above, the monitoring may also comprise determining a severity level of the interference. Only interference meeting some severity criteria would then be subject to further processing and potential ramp inversion. Less severe interference signals may be discarded, at least if more severe interference is present simultaneously.

If interference is detected S4, ramp polarity is switched if one or more switch criteria, or a combination of criteria, are met. The switch criteria comprise any combination of relative ramp polarity of the ego signal and interfering waveform S5, relative interference impact S9, and a switch with probability S71 based on evaluation of a random value.

In other words, Figure 7 illustrates methods comprising switching S7 the ego ramp polarity or the interference ramp polarity to opposite polarity if a switch criterion is met.

At least part of the switch criterion comprises determining an interference impact associated with the detected interference, compared to other detected interferences.

According to some aspects, at least part of the switch criterion comprises determining an interference ramp polarity associated with the interference, wherein at least part of the switch criterion is met if the interference ramp polarity is the same as the ego ramp polarity S6.

According to other aspects, at least part of the switch criterion comprises determining S9 an interference impact associated with the detected interference, relative to a reference impact level, wherein at least part of the switch criterion is met if the interference impact is above the reference level.

According to further aspects, at least part of the switch criterion comprises switching ramp polarity with a given probability S71 based on evaluation of a random value.

Ramp polarity may be determined in a number of different ways. Some such examples of how ramp polarity can be determined was already given above. According to an example, determining the interference ramp polarity comprises tracking the interference S51 as it crosses a receive bandwidth of the radar transceiver 110. The operation may simply comprise the radar receiver tracking the interfering signal as it traverses the receive bandwidth of the radar transceiver.

With reference to Figure 3A, ramp polarity can be determined based on where the interfering signal enters and leaves the IF bandwidth. An interfering signal entering the lower adjacent band 360 and leaves via the upper 370 has positive ramp polarity while the reverse is true for an interfering signal entering the upper adjacent band 370 and leaving via the lower adjacent band 360.

Determining the interference ramp polarity may optionally also comprise pausing S52 transmission of the radar signal as the interference signal traverses a receive bandwidth of the radar transceiver 110. This makes it easier to monitor the interfering waveform since there is no ego transmission to account for.

Determining the interference ramp polarity may furthermore optionally comprise filtering S53 the received radar signal to detect signal content at adjacent frequencies above and below a receive frequency band of the radar transceiver 110. The sequence of signal content detection then provides information about ramp polarity. First above and then below in frequency means the ramp is going down in frequency and vice versa if signal content is first detected below and then above the IF frequency band. If the interference ramp polarity is the same as the ego ramp polarity S6, aspects of the method comprises switching S7 the ego ramp polarity to opposite polarity.

In general, the ramp polarity change can occur either between blocks of chirps, or within a block of chirps, assuming of course that real-time processing of the IF signal is performed. The polarity switch can also be made on some other frame basis, i.e., polarity switch can be performed at a variety of different time instants.

Figure 7 also illustrates that ramp polarity can be switched in case the detected interference is of significant impact, where significant is judged relative to some reference impact level. In other words, according to some aspects, the method comprises determining S9 an interference impact associated with the detected interference, relative to a reference impact level, and, if the interference impact is above the reference level, switching S7 the ego ramp polarity or the interference ramp polarity to opposite polarity.

This way ramp polarity is switched whenever a more severe interference is encountered than previously, in the hope that this more severe interference will be alleviated by the ramp polarity switch.

For instance, the number of interfered ADC samples can be counted for a given interference event. The interfered number of samples can be compared to other interference events, and the ramp polarity can be switched if the present number of interfered samples was larger than the other numbers of interfered samples.

Thus, if a previous interference resulted in N interfered samples for a given ramp polarity, and a recent interferer causes more than N samples with interference at the same polarity, then ramp polarity is switched.

To avoid both radars changing polarity simultaneously, and thus maintaining the same interference scenario as before the interference detection but with opposite polarity for both radar signals, the change in polarity can, as noted above, optionally also be done randomly, e.g. with a 20% chance or so. This is somewhat akin to the random time back-offs used in Wi-Fi contention resolution mechanisms. In other words, according to some aspects, switching the ego ramp polarity, or the interference ramp polarity, comprises switching ramp polarity with a given probability S71. According to some aspects, this means that, for example, a probability is determined, and within this probability the switch is performed randomly, such that there is a random decision that can be biased depending on the probability, where the probability for a polarity switch to be performed can be of any suitable value, even 50%.

Interference may optionally be further suppressed by altering one or more parameters of the radar transmission in addition to the ramp polarity parameter. According to some aspects, the method comprises adjusting one or more parameters of the ego ramp or interfering signal ramp S8 in dependence of the detected interference signal. For instance, optionally, the adjusting may comprise determining S81 a relative frequency gradient between the transmitted radar signal and the interfering radar signal. The ego waveform (or the interfering waveform) may then be adjusted to fit the other waveform as well as possible given requirements on radar operation such as range capability and the like. It is possible to adjust, for instance, frequency derivative S82 and/or a transmission delay parameter S83 of the transmitted radar signal in dependence of parameters of the detected interference.

It is noted that the adjusting of ramp parameters may be done even if one or more of the switch criteria are not met. It may be advantageous to adjust, e.g., ramp slope even if no polarity switch is made.

According to some aspects, when determining S9 an interference impact associated with the detected interference relative to a reference impact level, if the interference impact is determined to be below the reference level, there is no switching of ramp polarity. Instead, either the above adjusting of one or more parameters of the ego ramp or interfering signal ramp S8 in dependence of the detected interference signal is performed, or, alternatively, the method continues by transmitting S1 a radar signal at a frequency f(t) with an associated ego ramp polarity.

Figure 8 schematically illustrates, in terms of a number of functional units, the components of the radar transceiver 110 according to an embodiment. Processing circuitry 810 is provided using any combination of one or more of a suitable central processing unit (CPU), multiprocessor, microcontroller, digital signal processor (DSP), dedicated hardware accelerator, etc., capable of executing software instructions stored in a computer program product, e.g. in the form of a storage medium 830. The processing circuitry 810 may further be provided as at least one application specific integrated circuit (ASIC), or field programmable gate array (FPGA).

Particularly, the processing circuitry 810 is configured to cause the radar transceiver 110 to perform a set of operations, or steps. These operations, or steps, were discussed above in connection to Figure 7. For example, the storage medium 830 may store the set of operations, and the processing circuitry 810 may be configured to retrieve the set of operations from the storage medium 830 to cause the radar transceiver 110 to perform the set of operations. The set of operations may be provided as a set of executable instructions. Thus, the processing circuitry 810 is thereby arranged to execute methods as herein disclosed.

The storage medium 830 may also comprise persistent storage, which, for example, can be any single one or combination of magnetic memory, optical memory, solid state memory or even remotely mounted memory.

The radar transceiver 110 may further comprise a communications interface 820 for communications with at least one control unit 130, i.e., a radar interface 820. As such, the radar interface 820 may comprise one or more transmitters and receivers, comprising analogue and digital components and a suitable number of ports for wired or wireless communication.

The processing circuitry 810 is adapted to control the general operation of the radar transceiver 110 e.g. by sending data and control signals to the radar interface 720 and the storage medium 830, by receiving data and reports from the radar interface 820, and by retrieving data and instructions from the storage medium 830. Other components, as well as the related functionality, of the radar transceiver 110 are omitted in order not to obscure the concepts presented herein.

Figure 9 shows a computer program product 900 comprising computer executable instructions 910 to execute any of the methods disclosed herein.

## Claims

1. A method for suppressing interference in a radar transceiver (110), the method comprising
transmitting (S1) a radar signal at a frequency f(t) with an ego ramp polarity,
receiving (S2) the radar signal,
monitoring (S3) the received radar signal for interference, and, if interference is detected (S4),
switching (S7) the ego ramp polarity or the interference ramp polarity to opposite polarity if a switch criterion is met,
**characterized in that** at least part of the switch criterion comprises detecting interference associated with a significant interference impact compared to other detected interferences.

2. The method according to claim 1, wherein at least part of the switch criterion comprises determining (S5) an interference ramp polarity associated with the interference, wherein at least part of the switch criterion is met if the interference ramp polarity is the same as the ego ramp polarity (S6) .

3. The method according to claim 1 or 2, wherein at least part of the switch criterion comprises determining (S9) an interference impact associated with the detected interference, relative to a reference impact level, wherein at least part of the switch criterion is met if the interference impact is above the reference level.

4. The method according to any previous claim, wherein at least part of the switch criterion comprises switching ramp polarity with a given probability (S71) based on evaluation of a random value.

5. The method according to claim 1, wherein the transmitting comprises transmitting (S11) a frequency modulated continuous wave, FMCW, radar signal having the frequency f(t) and the ego ramp polarity.

6. The method according to any previous claim, wherein the monitoring comprises monitoring (S31) a sample difference between a current time domain sample (x[n]) and a previous time domain sample (x[n-1]).

7. The method according to any previous claim, wherein the monitoring comprises filtering (S32) the received radar signal to detect signal content at frequencies adjacent to a receive frequency band of the radar transceiver (110).

8. The method according to any previous claim, wherein the monitoring comprises receiving (S33) a feedback signal indicating an onset of interference.

9. The method according to claim 2, wherein determining the interference ramp polarity comprises tracking the interference (S51) as it crosses a receive bandwidth of the radar transceiver (110).

10. The method according to claim 2 or 9, wherein determining the interference ramp polarity comprises filtering (S53) the received radar signal to detect signal content at adjacent frequencies above and below a receive frequency band of the radar transceiver (110).

11. The method according to any previous claim, comprising adjusting (S8) one or more parameters of the ego ramp or interfering signal ramp in dependence of the detected interference signal.

12. The method according to claim 11, comprising re-configuring (S81, S82, S83) a frequency derivative and/or a transmission delay parameter of the transmitted radar signal in dependence of parameters of the detected interference.

13. A radar transceiver (110, 400) comprising a transmit branch (450, 455, TX) arranged to transmit a radar signal at a frequency f(t) and with one or more ego ramp parameters comprising ego ramp polarity, and a receive branch (RX, 405, 410, 420, 430, 460) arranged to receive a radar signal, wherein the receive branch comprises an interference monitoring circuit (430) configured to monitor the received signal for interference, and to generate a control signal (440) if interference is detected and a switch criterion is met, wherein the transmit branch is arranged to switch sign of the ego ramp polarity parameter in response to the control signal (440), **characterized in that** the radar transceiver (400) is adapted to switch ramp polarity in response to detecting interference associated with a significant interference impact compared to other detected interferences.

14. The radar transceiver (110, 400) according to claim 13, wherein the transmit branch (450, 455, TX) is arranged to adjust one or more of the ego ramp parameters in dependence of the detected interference, wherein the ego ramp parameters comprises any of ramp delay, ramp frequency gradient, and number of chirps.

15. A vehicle (100) comprising the radar transceiver (110, 400) according to claim 13 or 14.

## Patentansprüche

1. Verfahren zum Unterdrücken von Störung in einem Radarsendeempfänger (110), das Verfahren umfassend
Übertragen (S1) eines Radarsignals bei einer Frequenz f(t) mit einer Ego-Rampenpolarität, Empfangen (S2) des Radarsignals,
Überwachen (S3) des empfangenen Radarsignals auf Störung, und, falls Störung erkannt (S4) wird,
Umschalten (S7) der Ego-Rampenpolarität oder der Störungsrampenpolarität auf entgegengesetzte Polarität, falls ein Umschaltkriterium erfüllt ist, **dadurch gekennzeichnet, dass**
mindestens ein Teil des Umschaltkriteriums ein Erkennen von Störung umfasst, die im Vergleich zu anderen erkannten Störungen mit einer signifikanten Störungsauswirkung verknüpft ist.

2. Verfahren nach Anspruch 1, wobei mindestens ein Teil des Umschaltkriteriums ein Bestimmen (S5) einer Störungsrampenpolarität umfasst, die mit der Störung verknüpft ist, wobei mindestens ein Teil des Umschaltkriteriums erfüllt ist, falls die Störungsrampenpolarität dieselbe wie die Ego-Rampenpolarität (S6) ist.

3. Verfahren nach Anspruch 1 oder 2, wobei mindestens ein Teil des Umschaltkriteriums das Bestimmen (S9) einer Störungsauswirkung umfasst, die mit der erkannten Störung relativ zu einem Referenzauswirkungspegel verknüpft ist, wobei mindestens ein Teil des Umschaltkriteriums erfüllt ist, falls die Störungsauswirkung über dem Referenzpegel ist.

4. Verfahren nach einem der vorhergehenden Ansprüche, wobei mindestens ein Teil des Umschaltkriteriums das Umschalten der Rampenpolarität mit einer gegebenen Wahrscheinlichkeit (S71) basierend auf einer Auswertung eines Zufallswerts umfasst.

5. Verfahren nach Anspruch 1, wobei das Übertragen das Übertragen (S11) eines frequenzmodulierten Dauerstrich-Radarsignals, FMCW-Radarsignals, umfasst, das die Frequenz f(t) und die Ego-Rampenpolarität aufweist.

6. Verfahren nach einem der vorhergehenden Ansprüche, wobei das Überwachen das Überwachen (S31) einer Abtastungsdifferenz zwischen einer aktuellen Zeitbereichsabtastung (x[n]) und einer vorherigen Zeitbereichsabtastung (x[n-1]) umfasst.

7. Verfahren nach einem der vorhergehenden Ansprüche, wobei das Überwachen ein Filtern (S32) des empfangenen Radarsignals umfasst, um Signalinhalte bei Frequenzen zu erkennen, die an ein Empfangsfrequenzband des Radarsendeempfängers (110) angrenzen.

8. Verfahren nach einem der vorhergehenden Ansprüche, wobei das Überwachen ein Empfangen (S33) eines Rückkopplungssignals umfasst, das einen Beginn von Störung anzeigt.

9. Verfahren nach Anspruch 2, wobei das Bestimmen der Störungsrampenpolarität ein Verfolgen der Störung (S51) bei ihrem Überkreuzen einer Empfangsbandbreite des Radarsendeempfängers (110) umfasst.

10. Verfahren nach Anspruch 2 oder 9, wobei das Bestimmen der Störungsrampenpolarität das Filtern (S53) des empfangenen Radarsignals umfasst, um Signalinhalte bei angrenzenden Frequenzen über und unter einem Empfangsfrequenzband des Radarsendeempfängers (110) zu erkennen.

11. Verfahren nach einem der vorhergehenden Ansprüche, umfassend ein Einstellen (S8) eines oder mehrerer Parameter der Ego-Rampe oder des Störungssignals in Abhängigkeit von dem erkannten Störungssignal.

12. Verfahren nach Anspruch 11, umfassend ein Neukonfigurieren (S81, S82, S83) einer Frequenzableitung und/oder eines Übertragungsverzögerungsparameters des übertragenen Radarsignals in Abhängigkeit von Parametern der erkannten Störung.

13. Radarsendeempfänger (110, 400), umfassend einen Übertragungszweig (450, 455, TX), der angeordnet ist, um ein Radarsignal bei einer Frequenz f(t) und mit einem oder mehreren Ego-Rampenparametern, umfassend Ego-Rampenpolarität, zu übertragen, und einen Empfangszweig (RX, 405, 410, 420, 430, 460), der angeordnet ist, um ein Radarsignal zu empfangen,
wobei der Empfangszweig eine Störungsüberwachungsschaltung (430) umfasst, die konfiguriert ist, um das empfangene Signal auf Störung zu überwachen und um ein Steuersignal (440) zu erzeugen, falls Störung erkannt wird und ein Umschaltkriterium erfüllt ist, wobei der Übertragungszweig angeordnet ist, um das Vorzeichen des Ego-Rampenpolaritätsparameters als Reaktion auf das Steuersignal (440) umzuschalten, **dadurch gekennzeichnet, dass**
der Radarsendeempfänger (400) angepasst ist, um die Rampenpolarität als Reaktion auf das Erkennen von Störung umzuschalten, die mit einer signifikanten Störungsauswirkung im Vergleich zu anderen erkannten Störungen verknüpft ist.

14. Radarsendeempfänger (110, 400) nach Anspruch 13, wobei der Übertragungszweig (450, 455, TX) angeordnet ist, um einen oder mehrere der Ego-Rampenparameter in Abhängigkeit von der erkannten Störung einzustellen, wobei die Ego-Rampenparameter einen beliebigen von Rampenverzögerung, Rampenfrequenzgradient und Anzahl von Chirps umfassen.

15. Fahrzeug (100), umfassend den Radarsendeempfänger (110, 400) nach Anspruch 13 oder 14.

## Revendications

1. Procédé de suppression d'interférence dans un émetteur-récepteur radar (110), le procédé comprenant
l'émission (S1) d'un signal radar à une fréquence f(t) avec une polarité de rampe ego, la réception (S2) du signal radar,
la surveillance (S3) du signal radar reçu pour détecter une interférence et, si une interférence est détectée (S4),
la commutation (S7) de la polarité de la rampe ego ou de la rampe d'interférence en polarité opposée si un critère de commutation est satisfait, **caractérisé en ce que**
au moins une partie du critère de commutation comprend la détection d'interférence associée à un impact d'interférence significatif par rapport à d'autres interférences détectées.

2. Procédé selon la revendication 1, dans lequel au moins une partie du critère de commutation comprend la détermination (S5) d'une polarité de rampe d'interférence associée à l'interférence, dans lequel au moins une partie du critère de commutation est satisfaite si la polarité de rampe d'interférence est la même que la polarité de rampe ego (S6).

3. Procédé selon la revendication 1 ou 2, dans lequel au moins une partie du critère de commutation comprend la détermination (S9) d'un impact d'interférence associé à l'interférence détectée, par rapport à un niveau d'impact de référence, dans lequel au moins une partie du critère de commutation est satisfaite si l'impact d'interférence est supérieur au niveau de référence.

4. Procédé selon l'une quelconque revendication précédente, dans lequel au moins une partie du critère de commutation comprend la commutation de polarité de rampe avec une probabilité donnée (S71) sur la base d'une évaluation d'une valeur aléatoire.

5. Procédé selon la revendication 1, dans lequel l'émission comprend l'émission (S11) d'un signal radar à ondes continues modulées en fréquence, FMCW, ayant la fréquence f(t) et la polarité de rampe ego.

6. Procédé selon l'une quelconque revendication précédente, dans lequel la surveillance comprend la surveillance (S31) d'une différence d'échantillon entre un échantillon de domaine temporel actuel (x[n]) et un échantillon de domaine temporel précédent (x[n-1]).

7. Procédé selon l'une quelconque revendication précédente, dans lequel la surveillance comprend le filtrage (S32) du signal radar reçu pour détecter un contenu de signal à des fréquences adjacentes à une bande de fréquence de réception de l'émetteur-récepteur radar (110).

8. Procédé selon l'une quelconque revendication précédente, dans lequel la surveillance comprend la réception (S33) d'un signal de retour indiquant un début d'interférence.

9. Procédé selon la revendication 2, dans lequel la détermination de la polarité de rampe d'interférence comprend le suivi de l'interférence (S51) lorsqu'elle traverse une largeur de bande de réception de l'émetteur-récepteur radar (110).

10. Procédé selon la revendication 2 ou 9, dans lequel la détermination de la polarité de rampe d'interférence comprend le filtrage (S53) du signal radar reçu pour détecter un contenu de signal à des fréquences adjacentes supérieures et inférieures à une bande de fréquence de réception de l'émetteur-récepteur radar (110).

11. Procédé selon l'une quelconque revendication précédente, comprenant le réglage (S8) d'un ou plusieurs paramètres de la rampe ego ou de la rampe de signal d'interférence en fonction du signal d'interférence détecté.

12. Procédé selon la revendication 11, comprenant la reconfiguration (S81, S82, S83) d'une dérivée de fréquence et/ou d'un paramètre de retard d'émission du signal radar émis en fonction des paramètres de l'interférence détectée.

13. Émetteur-récepteur radar (110, 400) comprenant une branche d'émission (450, 455, TX) agencée pour émettre un signal radar à une fréquence f(t) et avec un ou plusieurs paramètres de rampe ego comprenant la polarité de rampe ego, et une branche de réception (RX, 405, 410, 420, 430, 460) agencée pour recevoir un signal radar,
dans lequel la branche de réception comprend un circuit de surveillance d'interférence (430) configuré pour surveiller le signal reçu pour détecter une interférence et pour générer un signal de commande (440) si une interférence est détectée et un critère de commutation est satisfait, dans lequel la branche d'émission est agencée pour commuter un signe du paramètre de polarité de rampe ego en réponse au signal de commande (440), **caractérisé en ce que**
l'émetteur-récepteur radar (400) est adapté pour commuter la polarité de rampe en réponse à la détection d'une interférence associée à un impact d'interférence significatif par rapport à d'autres interférences détectées.

14. Émetteur-récepteur radar (110, 400) selon la revendication 13, dans lequel la branche d'émission (450, 455, TX) est agencée pour régler un ou plusieurs des paramètres de la rampe ego en fonction de l'interférence détectée, les paramètres de la rampe ego comprenant l'un quelconque parmi un retard de rampe, un gradient de fréquence de rampe et un nombre de chirps.

15. Véhicule (100) comprenant l'émetteur-récepteur radar (110, 400) selon la revendication 13 ou 14.
